# EUROPEAN PATENT SPECIFICATION

(11) **EP 1 396 617 B1**
(45) Date of publication and mention of the grant of the patent: **26.05.2010**
(21) Application number: 03019569.7
(22) Date of filing: 02.09.2003
(51) Int. Cl.: F01N 3/08, F02D 41/02

(54) **Exhaust gas control system for an internal combustion engine**
Abgassteuerungssystem für eine Brennkraftmaschine
Système de commande des gaz d'échappement pour un moteur à combustion interne

(30) Priority: 03.09.2002 JP 2002257539
(43) Date of publication of application: 10.03.2004
(73) Proprietor: MITSUBISHI JIDOSHA KOGYO KABUSHIKI KAISHA, Tokyo 108-8410 (JP)
(72) Inventor: Watanabe, Tetsuya, Minato-ku, Tokyo 108-8410 (JP)
(74) Representative: Vossius & Partner

(56) References cited:
- EP-A- 0 984 142
- WO-A-01/94759
- DE-A1- 10 311 708

## Description

The present invention relates to an exhaust emission control system for reducingparticulatematters (PM) and exhaust gas compositions such as HC, CO and NOx which are all contained in exhaust gases from an internal combustion engine.

Conventionally, various techniques have been developed and proposed for lowering particulate matters and exhaust gas compositions such as HC, CO and NOx which are all emitted from diesel engines all together.

Among these techniques, as a technique for lowering PM, a technique is widely known in which a diesel particulate filter (hereinafter referred to as DPF or, simply, as a filter) is provided at a position along the length of an exhaust passageway for collecting PM. Such an example of a filter is disclosed in US 529 530 A.

In addition, as a technique for lowering exhaust gas compositions, a lean NOx catalyst has been developed in which NOx is controlled under oxidizing atmosphere, and as the lean NOx catalyst, an occlusion type NOx catalyst (hereinafter, simply referred to as a NOx occlusion catalyst or a NOx catalyst) is widely known. In the NOx occlusion catalyst, NOx in exhaust gas is occluded (trapped) under oxidizing atmosphere, and when the oxygen concentration lowers, the NOx so occluded is then emitted and reduced. Most of the NOx emitted from the NOx occlusion catalyst is reduced to harmless N₂ by unburned HC and CO emitted from the engine and is then discharged to the atmosphere.

Additionally, when the engine continues to be run with a lean air-fuel ratio, the NOx catalyst is brought to a saturated state in which no more NOx can be occluded, and therefore, in general, a control (referred to as a NOx purge control or a rich spike control) is executed at a selected timing in which the air-fuel ratio is forcibly made to become rich temporarily. Then, the oxygen concentration in exhaust gas is lowered through the NOx purge control so as to allow occluded NOx to be emitted from the NOx occlusion catalyst, whereby the NOx occlusion catalyst is regenerated to restore the state in which NOx can be occluded therein.

In addition, JP-B-2722987 discloses a technique in which a NOx occlusion catalyst is carried on a filter, and a regenerating process of the filter is performed after a regenerating process of the NOx occlusion filter has been done, whereby an amount of heat needed when the filter is regenerated is saved by making effective use of reaction heat generated when the NOx occlusion catalyst is regenerated.

Incidentally, there has been a desire that PM be burned at as low a temperature as possible when the filter is regenerated. This is because, in case PM is burned at high temperatures, the filter is thermally deteriorated, and furthermore, there may be caused a possibility that the filter itself is fused. In the technique disclosed in the Patent Literature NO. 1 above, however, no consideration is taken at all as to an effort to lower the regenerating temperature of the filter or the burning temperature of PM.

On the other hand, as a method for lowering the burning temperature of PM, it is widely known that an alkaline metal (in particular, potassium) is carried on the filter, and a remarkable burning temperature lowering effect can be provided from this method. Due to this, while it is conceivable to lower the burning temperature by adding the alkaline metal to the technique disclosed in the Patent Literature No. 1 above, as this really occurs, the alkaline metal so added lowers the oxidizing force of a noble metal contained in the NOx catalyst, leading to a problem that the NOx removing performance of the NOx catalyst is lowered. Due to this, an increase in the particulate matters removing performance cannot be compatible with an increase in NOx removing performance.

Namely, while the alkaline metal is highly capable of oxidizing (or removing) particulate matters, when used compatibly with the NOx catalyst, the alkaline metal tends to lower the NOx occluding capability of the NOx catalyst. This is because the activity (oxidizing force) of Pt carried on the filter is considered to be deteriorated by the alkaline metal due to the high electronegativity of the alkaline metal.

The invention was made in view of the problem and an object thereof is to provide an exhaust emission control system for an internal combustion engine which can burn particulate matters collected on the filter at as low a temperature as possible without deteriorating the NOx removing capability of the NOx catalyst.

According to the invention, there is provided an exhaust gas control system according to claim 1.

The present invention may be more readily described with reference to the accompanying drawings:
Fig.1 is a typical diagram illustrating an overall construction of an exhaust emission control system for an internal combustion engine according to an embodiment of the invention.
Figs. 2A and 2B are typical diagrams illustrating a main part of the exhaust emission control system for an internal combustion engine according to the embodiment of the invention, Fig. 2A being a typical sectional view illustrating the interior of a diesel particulate filter, and Fig. 2B being a typical enlarged sectional view illustrating collecting walls of the same filter.
Fig. 3 is a graph explaining the function of the exhaust emission control system for an internal combustion engine according to the embodiment of the invention.
Fig. 4 is a graph explaining the function of the exhaust emission control system for an internal combustion engine according to the embodiment of the invention.
Figs. 5A and 5B are both sectional views of modifications made to the exhaust emission control system for an internal combustion engine according to the embodiment of the invention.

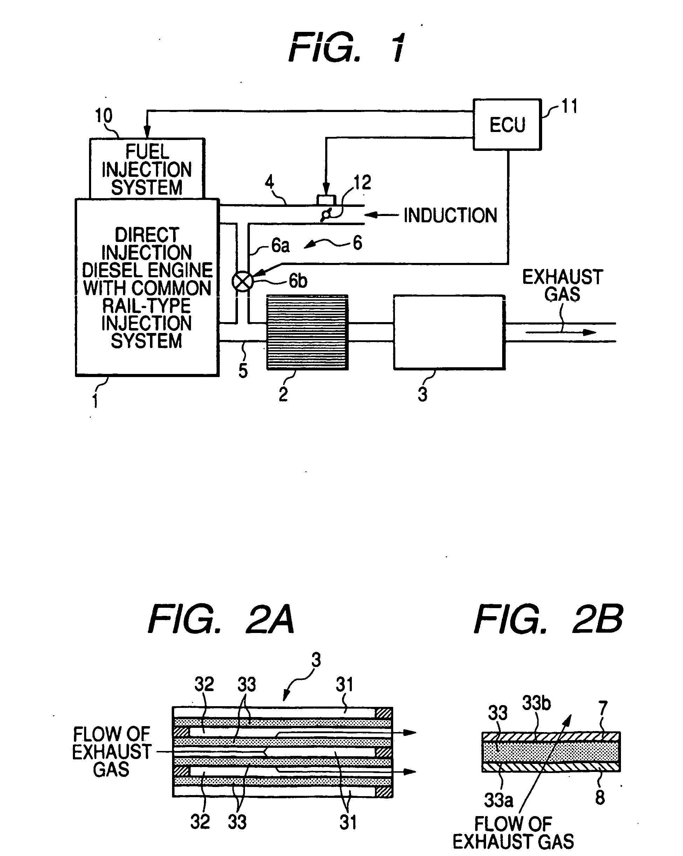

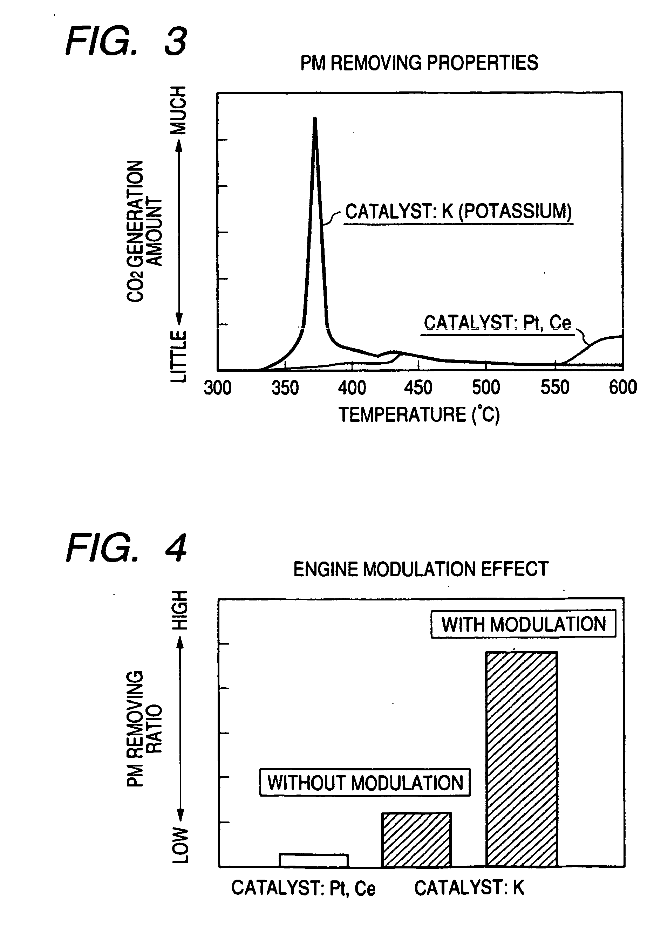

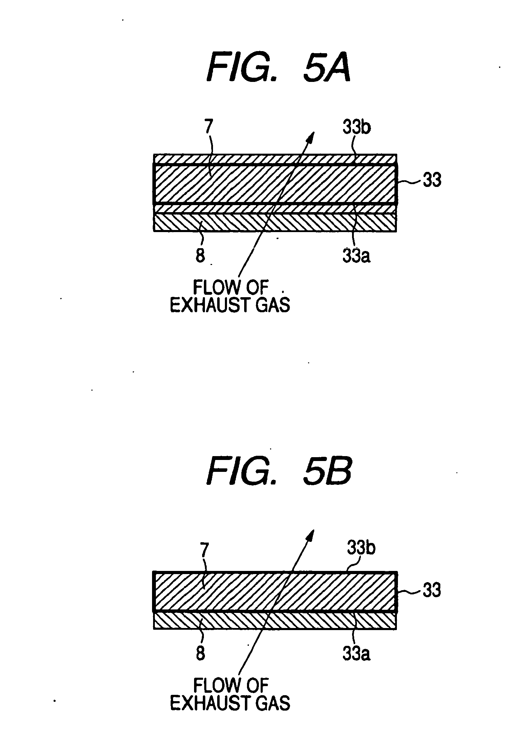

An exhaust emission control system for an internal combustion engine according to an embodiment of the invention will be described belowby reference to the accompanying drawings. Among the drawings, Fig. 1 is a typical diagram illustrating an overall construction of an exhaust emission control system for an internal combustion engine according to an embodiment of the invention, Fig. 2 is typical diagrams illustrating the construction of a main part of the system, Fig. 2A being a typical sectional view illustrating the interior of a diesel particulate filter, and Fig. 2B being a typical enlarged sectional view illustrating collecting walls of the same filter, Figs. 3, 4 are both graphs explaining the function of the system, and Figs. 5A, 5B are both sectional views of modifications made to the system.

In Fig. 1, reference numeral 1 denotes an internal combustion engine (engine) , and in this embodiment, the exhaust emission control system is applied to a direct injection diesel engine provided with a known common rail-type fuel injection system 10.

In addition, this engine 1 has an EGR system 6 for recirculating part of exhaust gases to an induction system. The EGR system 6 mainly includes an EGR passageway 6a which establishes a communication between an induction passageway 4 and an exhaust passageway 5, an EGR valve 6b provided along the length of the EGR passageway 6a for controlling the flow rate of exhaust gas (EGR gas) which is so recirculated and an EGR control means (not shown) for controlling operating conditions of the EGR valve 6b.

In addition, the EGR control means is configured as a functional element which is incorporated in a controller (ECU) 11 for generally controlling the engine 1 as part thereof. Additionally, the ECU 11 is designed to determine an operating condition of the engine 1 based on detection signals sent from various sensors, and the EGR control means is designed to output a control signal to the EGR valve 6b according to the operating condition of the engine so determined by the ECU 11.

Furthermore, an oxidation catalyst 2 and a diesel particulate filter (hereinafter, simply referred to as a filter or DPF) 3 are disposed in that order on the exhaust passageway 5 of the engine 1 from an upstream side thereof.

Of them, the oxidation catalyst 2 is such as to oxidize HC to H₂O and CO₂ and CO to CO₂, and to oxidize SOF in PM so as to facilitate the combustion of PM.

In addition, the filter 3 has a function to collect PM in exhaust gas to lower PM and a function to occlude and reduce NOx. Of these functions, firstly, the PM collecting function will be described. As shown in Fig. 2A, the filter 3 is constructed as a wall flow-type particulate filter which is constructed by arranging first flow paths 31 which are each openedat one end (an upstream end relative to the flow of exhaust gas) and closed at the other end (a downstream end relative to the flow of exhaust gas) and second flow paths 32 which are each closed at one end and opened at the other end, as opposed to the aforesaid first flow paths 31, in such a manner that they are disposed adjacent to each other in an alternate fashion.

Additionally, a carrier block of the filter 3 is formed from a porous material such as cordierite and SiC, and due to this, exhaust gas is allowed to pass through wall portions (collecting walls) 33 of the respective flow paths 31, 32, whereby exhaust gas emitted from the engine 1 first enters the first flow paths 31, then pass through the wall portion 33, and then enters the second flowpaths 32 that is disposed adjacent to the first flow paths 31 and is finally discharged from the filter 3. Then, particulate matters are collected at the wall portions 33 when exhaust gas passes through the wall portions 33.

Next, the NOx occluding and reducing function will be described. As shown in Fig. 2B, a NOx catalyst (a NOx occluding catalyst) 7 is carried on a wall surface (a wall surface exposed to the second flow path 32 side) 33b which is located on a downstream side of the wall portion 33 of the filter 3. This NOx catalyst 7 is an occlusion type NOx catalyst 7 adapted for absorbing NOx contained in exhaust gas when the air-fuel ratio of exhaust gas is lean and emitting and reducing the NOx so absorbed when the oxygen concentration in exhaust gas lowers (the air-fuel ratio becomes rich or stoichiometric), and the catalyst does not contain potassium but contains an alkaline earth metal (barium) and platinum (Pt).

Here, the characteristics of the metals will briefly be described. Platinum is activated at a relatively low temperature and hence is suitable for use on diesel engines, and the alkaline earth metal such as barium has a higher NOx occluding capability at a low temperature than alkaline metals and its usage temperature band is suitable for use on diesel engines. In addition to these, the alkaline earth metal has an advantage that no adverse effect is imposed on platinum. Note that since it has a high electronegativity and tends to lower the activity of platinum, potassium (alkaline metal) must not be used for this NOx catalyst 7.

On the other hand, an alkaline metal catalyst 8 is carried on a wall surface (a wall surface exposed to the first flow path 31 side) 33a which is located on an upstream side of the wall portion 33 of the filter 3. This alkaline metal catalyst 8 does not contain a noble metal such as platinum and is formed to contain mainly potassium, whereby, when collected on the upstream side wall surface 33a of the collecting wall 33, particulate matters in exhaust gas burn by the oxidizing action of potassium. Note that a preferable carrying amount of alkaline metal ranges 1 to 50g/L in terms of metal.

Here, potassium has advantages that it has a high capability of oxidizing PM (a high PM removing capability) and that, as shown in Fig. 3, its burning initiation temperature when PM is oxidized (burned) is low and hence imposes less thermal effects on the filter 3. However, conventionally, when used compatible with NOx catalyst 7, potassium used to impose adverse effects on platinum in the NOx catalyst 7 to thereby result in the deterioration in the NOx occluding capability.

In contrast to the conventional case, according to the embodiment of the invention, the alkaline metal catalyst 8 containing potassium and the occlusion type NOx catalyst 7 containing platinum is carried on the filter 3 in such a manner as to be separated on the upstream side and the downstream side of the collecting wall 33 thereof, whereby there is no risk that the two catalysts impose adverse effects on each other, and both the NOx occluding capability and the PM oxidizing capability can be increased.

Note that in this embodiment, both the NOx catalyst 7 and the alkalinemetal catalyst 8 are carriedon thewall surfaces of the collecting wall 33 by being applied thereto. In other words, the respective catalysts are formed into, for example, powder, and the NOx catalyst 7 is first caused to flow into the filter 3 from one side of the filter 3, whereas the alkaline metal catalyst 8 is caused thereafter to flow into the filter 3 from the other side, so that both the catalysts can be carried on the respective surfaces 33a, 33b of the collecting wall 33. In contrast, apart from this application method, one of the catalysts may be formed into liquid so as to be impregnated into the collecting wall 33, and thereafter, the other catalyst may be caused to flow from one side of the filter so that the other catalyst can be carried on the one side of the collecting wall. In this case, the cross section of the collecting wall 33 will result as shown in Figs. 5A and 5B. In addition, the method for causing the respective catalysts 7, 8 to be carried on the filter 3 is not limited to those that have just been described but various methods can be adopted instead.

Incidentally, the NOx purge control element (not shown) is provided in ECU 11, and when NOx occluded in the NOx catalyst 7 reaches a predetermined amount, a NOx purge control (an engine modulation) occurs in the NOx purge control element of the ECU 11 in which the air-fuel ratio is temporarily switched to rich and lean with a view to reducing NOx.

When the engine modulation is executed, a control in which the EGR valve 6b is controlled by the EGR control means to be fully opened or opened to a predetermined opening, while an intake throttle valve 12 is controlled to lower a ratio of intake air (air) contained in exhaust gas, so that an air-fuel ratio is made rich and a control in which the EGR valve 6b is controlled by the EGR control means to be situated on a closed side, while the intake throttle valve 12 is fully opened, so that the air-fuel ratio is made lean are executed repeatedly.

The NOx catalyst 7 can be regenerated by executing the engine modulation like this, and on top of this, as shown in Fig. 4, the PM removing capability of the filter 3 is remarkably enhanced when compared with a case where no such engine modulation is executed. The remarkable enhancement in PM removing capability by the engine modulation was found by the inventor of this invention and the PM removing capability is considered to be enhanced by the following reasons.
(1) Promotion of PM oxidizing activity by the alkaline metal;
(2) PM oxidation promotion by NO2 while NOx is absorbed and desorbed; and
(3) PM oxidation promotion in association with the burning of SOF.

Among the tree reasons, the reason (1) is considered to result from the effect of the electric conditions (the high electronegativity) of the alkaline metal. In addition, the reason (2) is considered to result from the effect of a reaction generated when NOx is absorbed in and desorbed from the NOx catalyst 7 or the effect of activated oxygen. Moreover, the reason (3) is considered to result from the engine operation (the engine modulation) for effecting a switch between lean and rich.

Since the exhaust emission control system according to the embodiment of the invention is constructed as has been described heretofore, exhaust gas emitted from the engine 1 passes through the exhaust passageway 5 to firstly flow into the oxidation catalyst 3. Then, in this oxidation catalyst 3, HC and CO in the exhaust gas are oxidized to harmless H₂O and CO₂, respectively, and SOF fraction of the exhaust gas is brought to a condition in which SOF is easily burned through an oxidizing action.

In addition, the exhaust gas then flows into the filter 3. Here, the exhaust gas flows into the first flow paths 31 which are opened at the upstream ends thereof, passes through the collecting walls 33 and flows into the second flow paths 32 . Then, particulate matters in the exhaust gas are collected when the exhaust gas passes through the collecting walls 33.

Then, the PM so collected is oxidized (burned out) through the action of the alkaline metal catalyst 8 carried on the upstream side of the collecting wall 33. In particular, since the alkaline metal catalyst 8 contains potassium, PMis oxidized (burned) at a relatively low temperature (in the order of 350 to 370°C) (refer to Fig. 3). Consequently, thermal effect on the filter 3 can be reduced to as low a level as possible so as to suppress the thermal deterioration of the filter 3, whereby the regenerating capability of the filter 3 and hence the PM removing performance thereof can be improved.

In addition, after PM has been collected, NOx in the exhaust gas is occluded by the NOx catalyst 7 carried on the downstream side of the collecting wall 33. Here, since the NOx catalyst 7 contains barium and platinum, NOx is removed with good efficiency. Namely, since barium is characteristic of having a superior NOx occluding capability at low temperatures, whereas platinum is characteristic of having a superior activity at low temperatures, NOx can be removed efficiently at relatively low exhaust gas temperatures.

In addition, in general, while potassium is highly effective in lowering the burning initiation temperature of particulate matters, potassium has provided the problem of deteriorating the oxidizing force of platinum. According to the embodiment of the invention, however, since the alkaline metal catalyst (potassium) and the occlusion type NOx catalyst (platinum) are carried separately on the upstream side and the downstream side of the collecting walls 33 of the particulate filter 3, the adverse effect on platinum by potassium can be avoided, whereby a situation in which the two catalysts affect each other adversely can be prevented from resulting, thereby making it possible to improve the general exhaust emission controlling performance of the particulate filter can effectively be enhanced.

In addition, since potassium is highly effective in lowering the burning initiation temperature of particulates, the burning of particulates can be promoted so as to effectively increase the particulates removing performance of the filter. In addition, since barium has the superior NOx occluding capability at the low temperature area, whereas platinum is a noble metal having the superior activity at low temperatures, NOx can effectively be removed at the relatively low exhaust gas temperature area. In particular, although potassium provides the problem of lowering the oxidizing force of platinum while potassium is highly effective in lowering the burning initiation temperature of particulates, since potassium and platinum are carried separately on the upstream side and the downstream side of the collectingwalls of the particulate filter, the adverse effect by potassium can effectively be prevented.

On the other hand, when the NOx occlusion amount of the NOx catalyst 7 reaches and exceeds a predetermined value, an engine modulation is executed in which the air-fuel ratio of the engine 1 is alternately switched to rich and lean. This engine modulation is originally intended to be executed so as to emit and reduce NOx occluded in the NOx catalyst 7 when the NOx occlusion amount of the NOx catalyst 7 reaches a level where no more NOx can be occluded therein, and the NOx catalyst 7 can be regenerated by executing such engine modulation. Furthermore, there is also provided an advantage that the PM removing efficiency can be enhanced remarkably by executing the engine modulation when compared with a case where no such engine modulation is executed (refer to Fig. 4).

In addition, by disposing the oxidation catalyst upstream of the alkaline metal catalyst there can be provided an advantage that the SOF fraction in the exhaust gas is made to burn easily by the oxidation catalyst to thereby enhance further the particulates removing performance of the filter, and apart from this, since the oxidation catalyst is additionally disposed upstream of the particulate filter, there can also be provided an advantage that the alkaline metal catalyst does not effect the oxidation catalyst adversely in any case.

Note that the invention is not limited to the embodiment that has been described heretofore but maybe modified variously without departing from the scope of the invention. For example, while, in the embodiment, the engine modulation is designed to be executed when the NOx occlusion amount reaches and exceeds the predetermined value, insteadof this, for example, an engine running time is counted since the last engine modulation was completed, so that another engine modulation may be executed when a predetermined period of time has elapsed since the last engine modulation. In addition, the oxidation catalyst maybe removed and the engine modulation may be omitted.

## Claims

1. An exhaust gas control system for an internal combustion engine (1) having a particulate filter (3) provided in an exhaust passageway (5) of an internal combustion engine (1) for collecting particulates contained in exhaust gas, the exhaust gas control system for an internal combustion engine comprising:
an alkaline metal catalyst (8) disposed on an upstream side of the particulate filter, and
wherein the alkaline metal catalyst (8) contains potassium;
**characterized in that**
an occlusion type NOx catalyst (7) disposed on a downstream side of the particulate filter and adapted for absorbing NOx in discharged exhaust gas when an air-fuel ratio of exhaust gas is lean and emitting and reducing the Nox so absorbed when an oxygen concentration in exhaust gas reduces, wherein
the occlusion type NOx catalyst (7) does not contain potassium but contains barium and platinum.

2. The exhaust gas control system for an internal combustion engine as set forth in claim 1,
wherein the alkaline metal catalyst (8) contains no noble metal.

3. The system as set forth in claim 1 or 2,
wherein the alkaline metal catalyst (8) is carried on an upstream side of a collecting wall (33) of the particulate filter.

4. The system as set forth in claim 1, 2, or 3,
wherein the occlusion type NOx catalyst (7) is carried on a downstream side of the collecting wall (33) of the particulate filter.

5. The system as set forth in claim 1, 2, 3, or 4,
further comprising: NOx purge control element for performing a NOx purge control for regularly lowering the oxygen concentration of exhaust gas supplied to the occlusion type NOx catalyst (7).

6. The system as set forth in any one of claims 1 to 5,
wherein an oxidation catalyst (2) is provided an upstream side of the alkaline metal catalyst (8).

## Patentansprüche

1. Abgassteuerungssystem für eine Brennkraftmaschine (1) mit einem in einem Abgaskanal (5) einer Brennkraftmaschine (1) vorgesehenen Rußpartikelfilter (3) zum Auffangen von im Abgas enthaltenen Rußpartikeln, wobei das Abgassteuerungssystem für eine Brennkraftmaschine aufweist:
einen Alkalimetall-Katalysator (8), der in Strömungsrichtung vor dem Rußpartikelfilter angeordnet ist, und
wobei der Alkalimetall-Katalysator (8) Kalium aufweist,
**dadurch gekennzeichnet, dass**
ein NOₓ-Okklusionskatalysator (7) in Strömungsrichtung nach dem Rußpartikelfilter angeordnet und zum Absorbieren von NOₓ im abgegebenen Abgas angepasst ist, wenn das Luft-Kraftstoff-Verhältnis des Abgases mager ist, und zum Emittieren und Reduzieren des NOₓ vorgesehen ist, das absorbiert wird, wenn die Sauerstoffkonzentration im Abgas reduziert wird,
wobei der NOₓ-Okklusionskatalysator (7) kein Kalium aber Barium und Platin enthält.

2. Abgassteuerungssystem für eine Brennkraftmaschine nach Anspruch 1, wobei der Alkalimetall-Katalysator (8) kein Edelmetall aufweist.

3. System nach Anspruch 1 oder 2, wobei der Alkalimetall-Katalysator (8) auf einer dem Strom zugewandten Seite einer Auffangwand (33) des Rußpartikelfilters angeordnet ist.

4. System nach Anspruch 1, 2 oder 3, wobei der NOₓ-Okklusionskatalysator (7) auf einer dem Strom abgewandten Seite der Auffangwand (33) des Rußpartikelfilters angeordnet ist.

5. System nach Anspruch 1, 2, 3 oder 4, das ferner ein NOₓ-Reinigungssteuerelement zum Ausführen einer NOₓ-Reinigungssteuerung aufweist, um die Sauerstoffkonzentration des Abgases regelmäßig zu erniedrigen, das dem NOₓ-Okklusionskatalysator (7) zugeführt wird.

6. System nach einem der Ansprüche 1 bis 5, wobei ein Oxidationskatalysator (2) in Strömungsrichtung vor dem Alkalimetall-Katalysator (8) vorgesehen ist.

## Revendications

1. Système de commande des gaz d'échappement pour un moteur à combustion interne (1) ayant un filtre à particules (3) prévu dans un passage d'échappement (5) d'un moteur à combustion interne (1) pour recueillir les particules contenues dans les gaz d'échappement, le système de commande des gaz d'échappement pour un moteur à combustion interne comprenant :
un catalyseur à métaux alcalins (8) disposé sur un côté amont du filtre à particules, et
où le catalyseur à métaux alcalins (8) contient du potassium ; **caractérisé en ce que**
un catalyseur à NOx de type à occlusion (7) disposé sur un côté aval du filtre à particules et adapté pour absorber NOx dans les gaz d'échappement évacués quand un rapport air-carburant des gaz d'échappement est pauvre et émettre et réduire les NOx ainsi absorbés quand une concentration d'oxygène dans les gaz d'échappement diminue ; où
le catalyseur à NOx de type à occlusion (7) ne contient pas de potassium mais contient du baryum et du platine.

2. Système de commande des gaz d'échappement pour un moteur à combustion interne selon la revendication 1 où le catalyseur à métaux alcalins (8) ne contient pas de métal noble.

3. Système selon la revendication 1 ou 2 où le catalyseur à métaux alcalins (8) est supporté sur un côté amont d'une paroi collectrice (33) du filtre à particules.

4. Système selon la revendication 1, 2 ou 3, où le catalyseur à NOx de type à occlusion (7) est supporté sur un côté aval de la paroi collectrice (33) du filtre à particules.

5. Système selon la revendication 1, 2, 3 ou 4 comprenant en outre : un élément de commande de purge de NOx pour réaliser une commande de purge de NOx pour abaisser régulièrement la concentration d'oxygène des gaz d'échappement fournis au catalyseur à NOx de type à occlusion (7).

6. Système selon l'une quelconque des revendications 1 à 5 où un catalyseur d'oxydation (2) est prévu sur un côté amont du catalyseur à métaux alcalins (8).
